# EUROPÄISCHE PATENTSCHRIFT

(11) **EP 0 303 989 B1**
(45) Veröffentlichungstag und Bekanntmachung des Hinweises auf die Patenterteilung: **10.02.1993**
(21) Anmeldenummer: 88113155.1
(22) Anmeldetag: 11.08.1988
(51) Int. Cl.: F16L 39/00, F23J 13/04

(54) **Stossverbindung für aus zwei konzentrischen Rohren bestehende Rohrschüsse**
Butt connection for two concentric-pipe lengths
Raccord droit pour deux éléments de tuyaux concentriques

(30) Priorität: 18.08.1987 AT 2070/87
(43) Veröffentlichungstag der Anmeldung: 22.02.1989
(73) Patentinhaber: Joh. Vaillant GmbH u. Co., 42810 Remscheid (DE); n.v. Vaillant s.a., 1620 Drogenbos (BE); VAILLANT S.A.R.L, 94537 Rungis Cedex (FR); VAILLANT Ges.m.b.H, 1233 Wien (AT); Vaillant Ltd., Rochester Kent ME2 4EZ (GB); Vaillant B.V., 1105 BJ Amsterdam (NL); Vaillant GmbH, 8953 Dietikon 1 (CH)
(72) Erfinder: Hellmann, Donald, D-5860 Iserlohn (DE)
(74) Vertreter: Heim, Johann-Ludwig, Dipl.-Ing.

(56) Entgegenhaltungen:
- DE-A- 2 720 451
- DE-A- 3 427 745
- DE-U- 1 870 244
- GB-A- 2 177 768
- US-A- 2 650 112
- US-A- 3 896 855

## Beschreibung

Die Erfindung betrifft eine Stoßverbindung für aus zwei konzentrischen Rohren verschiedener Durchmesser (Außen- und Innenrohr) bestehende, insbesondere Abgase und Verbrennungsluft von Gasbrennern führende Rohrschüsse, wobei zumindest die Innenrohre dieser Rohrschüsso mittels einer Manschette miteinander verbunden, die einen zwischen den Stirnseiten der Rohrschüsse bestehenden Abstand überbrückt.

Aus der US-A-2 650 112 und dem DE-U-1 870 244 sind Manschetten zur Verbindung doppelwandiger Rohrschüsse bekanntgeworden. Die Abstände zwischen den Rohrschüssen werden durch die Manschette ausgeglichen. Nachteilig ist, daß die Montage einer derartigen Rohrverbindung unter beengten örtlichen Verhältnissen, insbesondere hinsichtlich des axial zur Verfügung stehenden Bewegungsspielraumes, nicht möglich ist.

Aufgabe der Erfindung ist es, eine Stoßverbindung solcher Rohre zu schaffen, die sich auch unter vergleichsweise schwierigen örtlichen Verhältnissen ohne besonderen Zeit- und Müheaufwand herstellen läßt, beispielsweise auch dann, wenn der eine der beiden miteinander zu verbindenden Rohrschüsse ortsfest ist und der andere Rohrschuß lediglich in einer zur Achse dieses ortsfesten Rohrschusses senkrechten Richtung an dessen Ende herangeführt werden kann, wie zum Beispiel bei der Montage einer Abgas- und Zuluftführung eines brennerbeheizten Wandgerätes, das an eine in der Wand bereits eingebettete kombinierte Abgas-Frischluft-Führung angeschlossen werden soll.

Erfindungsgemäß ist die Manschette aus einer Stellung, in der sie in oder auf das Innen- oder Außenrohr das einen der beiden zu verbindenden Rohrschüsse ein- oder aufgeschoben ist und ihr freier Rand der Stirnseite des Innen- oder Außenrohres des anderen Rohrschusses mit axialem Abstand gegenüberliegt, in eine die innen- oder Außenrohre dieser Rohrschüsse verbindende Stellung verschiebbar, in der sie dann auf oder in das Innen- oder Außenrohr des anderen Rohrschusses auf- oder eingeschoben ist.

Dank dieser konstruktiven Lösung kann ein zunächst ortsbeweglicher Rohrschuß an einen ortsfesten Rohrschuß in einer zu dessen Achse senkrechten Richtung herangeführt und sodann, sobald die Rohrstutzen koaxial verlaufen, durch eine einfache axiale Verschiebung dar Manschette an diesen ortsfesten Rohrschuß angeschlossen werden.

Diese Lösung zeichnet sich vor allem dadurch aus, daß sie einfach zu handhaben ist und eine zuverlässige Verbindung ergibt.

Weiter mit dem 2. Absatz der Seite 2 der Ursprungsunterlagen.

Nach einer bevorzugten Ausführungsform des Erfindungsgegenstandes ist die Manschette aus einer Stellung, in der sie in oder auf das Innen- oder Außenrohr des einen der beiden zu verbindenden Rohrschüsse ein- oder aufgeschoben ist und ihr freier Rand der Stirnseite des Innen- oder Außenrohres des anderen Rohrschusses mit axialem Abstand gegenüberliegt, in eine die Innen- oder Außenrohre dieser Rohrschüsse verbindende Stellung verschiebbar, in der sie dann auf oder in das Innen-oder Außenrohr des anderen Rohrschusses auf- oder eingeschoben ist. Diese Ausführungsform zeichnet sich dadurch aus, daß sie einfach zu handhaben ist und eine zuverlässige Verbindung ergibt.

Die Manschette besteht zweckdienlicherweise aus zwei gegeneinander abgesetzten Abschnitten, von denen einer einen Innendurchmesser aufweist, der dem Außendurchmesser des Innen- bzw. Außenrohres des einen der beiden zu verbindenden Rohrschüsse entspricht, und der andere einen Außendurchmesser aufweist, der dem Innendurchmesser des Innen- bzw. Außenrohres des anderen der beiden zu verbindenden Rohrschüsse entspricht, Dadurch ergibt sich ein Paßsitz der beweglichen, der Verbindung dienenden Bestandteile, der einen soliden Zusammenhalt begünstigt.

Um den jeweils ortsbeweglichen Rohrschuß an den ortsfesten Rohrschuß mit geringstmöglichem Platzbedarf heranführen zu können, soll die Mindestlänge eines der beiden Rohrabschnitte der Manschette dem maximalen Abstand der Stirnseiten der Innen-bzw. Außenrohre der beiden miteinander zu verbindenden Rohrschüsse entsprechen.

Für den Fall, daß axiale Bewegungen der Manschette mit Sicherheit ausgeschlossen werden sollen, empfiehlt es sich, Kupplungsorgane zur Fixierung der die Innen- oder Außenrohre der zu verbindenden Rohrschüsse verbindenden Stellung der verschiebbaren Manschette vorzusehen.

Solche Kupplungsorgane können zur besonders zuverlässigen Funktion aus einer an der Manschette ausgebildeten winkelig verlaufenden Führung und einem an einem Ende eines der beiden miteinander zu verbindenden Rohrschüsse ausragenden, in diese Führung passenden Zapfen bestehen.

Die Handhabung einer solchen Manschette, die durch eine Drehung mit einem der Rohrschüsse verriegelt werden kann, wird wesentlich erleichtert, wenn an der Manschette eine radial ausragende, der Verschiebung und gegebenenfalls Drehung dienende Handhabe angeordnet wird.

Eine andere Art der Kupplung, die gleichfalls leicht handhabbar ist, ist mit einem Kupplungsorgan erzielbar, das aus einer die Wandung der Manschette in einer Bohrung, gegebenenfalls einer Gewindebohrung, durchsetzenden Schraube besteht. Eine solche Schraube kann einfach als Klemmschraube auf die Wandung des in der Manschette lagernden Rohres wirken, sie kann aber auch in eine Bohrung, gegebenenfalls eine Gewindebohrung, der Wandung des Innen- oder Außenrohres eines der zu verbindenden Rohrstutzen eingreifen.

Die Erfindung läßt sich in verschiedenerlei Varianten verwirklichen. So können etwa im Rahmen der Erfindung nur die Innenrohre der miteinander zu verbindenden Rohrschüsse mittels einer verschiebbaren Manschette, die Außenrohre hingegen mittels einer den Abstand ihrer Stirnseiten überbrückenden Rohrschelle verbunden sein.
Anderseits steht aber im Rahmen der Erfindung durchaus die vorteilhafte Möglichkeit offen, sowohl die Innenrohre als auch die Außenrohre der miteinander zu verbindenden Rohrschüsse mittels je einer verschiebbaren, die Abstände ihrer Stirnseiten überbrückenden Manschette zu verbinden.
Auch dabei sind verschiedene, auf den Zweck der Rohrleitungen abzustimmende Varianten ausführbar. So können sowohl die Innenrohre als auch die Außenrohre verbindende Manschetten des einen der beiden miteinander zu verbindenden Rohrschüsse das Innen-bzw. das Außenrohr des anderen Rohrschusses übergreifen und beide auf die Enden dieser Rohre in dieselbe Richtung weisend aufgeschoben sein.
Wenn jedoch die strömenden Medien in den beiden Rohren im Gegenstrom geführt werden, wie z.B. das Abgas und die Frischluft in der kombinierten Abgas-Frischluft-Führung eines brennerbeheizten Gerätes, dann ist vorteilhafterweise die Manschette des Außenrohres des einen der beiden Rohrschüsse in das Außenrohr des anderen Rohrschusses eingeschoben, jedoch die Manschette des Innenrohres dieses einen Rohrschusses auf das Innenrohr des anderen Rohrschusses aufgeschoben, so daß die auf die Enden der Innen- und Außenrohre aufgeschobenen Abschnitte der Manschetten jeweils gegen die vorgegebene Strömungsrichtung der in diesen Rohren strömenden Medien weisen, wodurch einem Austreten des Mediums an der Stoßverbindung wirksam vorgebeugt wird.

Die Verbindung zwischen den Manschetten und den die Rohrschüsse verkörpernden Rohren kann im Rahmen der Erfindung noch inniger gestaltet werden, wenn die Manschette an ihren beiden Stirnseiten zum Einschieben der stirnseitigen Enden des Innen- bzw. Außenrohres der beiden miteinander zu verbindenden Rohrschüsse Ringschlitze aufweist, deren Breite etwa der Dicke der Wandungen der Rohrschüsse entspricht.

Um die Montage solcher Manschetten bei beengten Raumverhältnissen zu erleichtern, können solche Ringschlitze an den beiden Stirnseiten ungleich tief ausgebildet werden, wobei die Mindesttiefe des tieferen Ringschlitzes dem maximalen Abstand der beiden miteinander zu verbindenden Rohrschüsse entspricht. Eine solche Manschette läßt sich dann mit ihrem tieferen Schlitz so weitgehend auf eines der Rohre der Rohrschüsse aufschieben, daß sie den Einbau des benachbarten Rohrschusses nicht behindert.

Die Ringschlitze können in das Material der Manschetten eingeformt oder eingearbeitet sein, besonders einfach läßt sich ein solcher Ringschlitz aber dadurch bilden, daß die Manschette ein rohrförmiges, mit einem die Schlitztiefe begrenzenden Außenwulst an der Innenwand der Manschette anliegendes Futter enthält.

Zur Begrenzung der Einschubtiefe können aber nach einer besonders einfachen Ausführungsform fakultativ die Manschetten an ihrer Innenwandung längsverlaufende Leisten mit einem die Einschubtiefe begrenzenden auswärtsragenden und an der Innenwandung der Manschetten anliegenden und beidseits Schlitze begrenzenden Wulst ausgebildet sein.

Das vorgenannte Futter bzw. die vorgenannten Leisten können problemlos an der Innenseite der Wandung der Manschette mittels Ausnehmungen der Manschettenwandung durchsetzender, in Ausnehmungen des Futters bzw. der Leisten eingreifender Schrauben befestigt werden. Solche Ausnehmungen lassen sich auch als Gewindebohrungen ausführen; sie sind zweckdienlicherweise in der Nähe der beiden Stirnseiten der Manschette bzw. des Futters bzw. der Leisten vorgesehen.

Die erfindungsgemäßen Manschetten lassen sich auch dann einsetzen, wenn Rohrschüsse unterschiedlicher Durchmesser miteinander zu verbinden sind, sie können in diesem Fall mit einer Absetzung ausgebildet werden. Am einfachsten ist eine solche Absetzung zwischen den beiden vorerwähnten, den zu verbindenden Rohren der Rohrschüsse zugewendeten Längsabschnitten der Manschette auszubilden. Gegebenenfalls kann eine solche Absetzung im Bereich des gleichfalls vorerwähnten Ringwulstes des Futters der Manschette, vorzugsweise neben diesem Ringwulst verlaufend, angeordnet werden.

Ausführungsbeispiele der Erfindungsgegenstandes sind in den Zeichnungen veranschaulicht und nachstehend an Hand dieser Zeichnungen erläutert. In diesen Zeichnungen zeigen
- Fig.1: eine Stoßverbindung zwischen zwei Rohrschüssen und deren Anschluß an ein Gerät in einem Axialschnitt,
- Fig.2: die Variante eines Details und
- Fig.3: ein Gerät mit einem solchen Anschluß in einer Seitenansicht in kleinerem Maßstab.
- Fig.4: ist eine Seitenansicht, teilweise ein Axialschnitt des Anschlusses an einen in einer Wand eingebauten Rohrschuß,
- Fig.5 und 6: stellen Varianten von Stoßverbindungen in schematischen Axialschnitten dar.
- Fig.7: zeigt im Axialschnitt eine Ausführungsvariante einer erfindungsgemäßen Stoßverbindung und
- Fig.8 und 9: stellen Ausführungsvarianten zugehöriger Manschetten in Axialschnitten dar.
- Fig.10: zeigt ein Detail in einer Variante und
- Fig.11: stellt schematisch im Axialschnitt eine abgewandelte Ausführungsform dar.

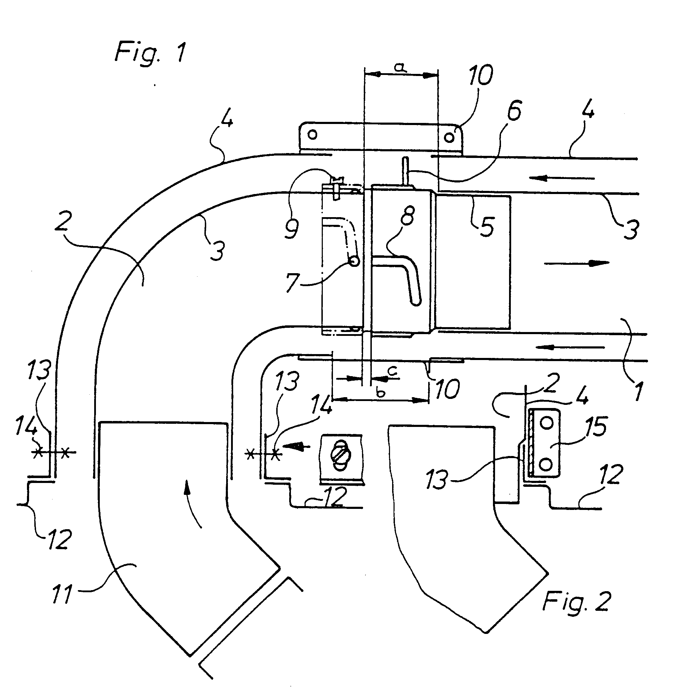

Bei der in Fig.1 dargestellten Stoßverbindung sind nur die Innenrohre 3 der beiden miteinander zu verbindenden Rohrschüsse 1 und 2 mittels einer verschiebbaren Manschette 5 verbunden, die mittels einer Handhabe 6 verschiebbar und drehbar ist, die Außenrohre 4 hingegen sind mittels einer den Abstand b ihrer Stirnseiten überbrückenden Rohrschelle 10 verbunden.

Die Manschette 5 ist in dem mit vollen Linien dargestellten Zustand mit einem Abschnitt, dessen Außendurchmesser dem Innendurchmesser des Innenrohres 3 des Rohrschusses 1 entspricht in dieses Innenrohr eingeschoben und ihre Stirnseite weist von der Stirnseite des Innenrohres 3 des Rohrschusses 2 noch einen geringen Abstand c auf. Im gestrichelt dargestellten verschobenen Zustand überbrückt die Manschette den Abstand a zwischen den freien Stirnseiten der Innenrohre 3 und kann in dieser Stellung durch Kupplungsorgane veriegelt werden.

Diese Kupplungsorgane bestehen beim dargestellten Ausführungsbeispiel aus einer an der Manschette 5 ausgebildeten, winkelig verlaufenden Führung 8 und aus einem am Ende des Innenrohres 3 des Rohrschusses 2 ausragenden und in die Führung 8 passenden Zapfen 7. Ferner ist als Kupplungsorgan eine die Wandung der Manschette 5 in einer Bohrung, gegebenenfalls einer Gewindebohrung durchsetzende,Schraube 9 vorgesehen, die entweder klemmend gegen die Wandung des Innenrohres 3 drückt oder in eine Bohrung, gegebenenfalls eine Gewindebohrung dieser Wandung eingreift.
Ferner zeigt Fig.1 noch den Anschluß des gekrümmten Rohrschusses 2 an die Mündung einer Abgasführung 11 eines brennerbeheizten, in einem Gehäuse 12 untergebrachten Gerätes, z.B. eines Wasserheizers. Bei dieser Verbindung ist das Innenrohr 3 des Rohrschusses 2 einfach auf die Mündung der Abgasführung 11 übergreifend aufgesteckt. Das Außenrohr 4 hingegen ist in einen Ringflansch 13 des Gehäuses 12 eingesteckt und mit radial angeordneten,Langlöcher durchsetzenden Schrauben 14 am Ringflansch 13 befestigt.
Fakultativ könnte auch eine Befestigung nach Fig.2 vorgesehen sein, wobei eine Lasche 15 im Verein mit dem Ringflansch 13 oder einer Schelle das abgesetzte Ende des Außenrohres 4 satt umschließt.

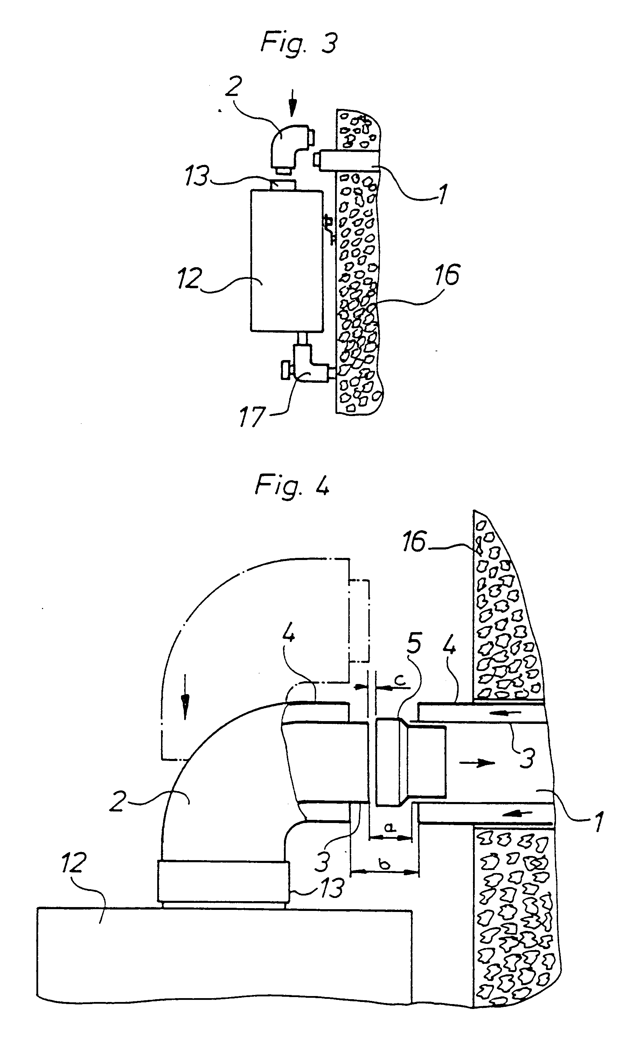

Fig.3 zeigt in einer Seitenansicht die Anordnung des brennerbeheizten Geräts an der Innenseite (Raumseite) eines Gebäudes, wobei das Problem veranschaulicht ist, das auftritt, wenn der gekrümmt verlaufende Rohrschuß 2 einerseits mit dem Ende eines in der Außenwand 16 ortsfest eingebetteten geraden Rohrschusses 1 und anderseits mit dem Ringflansch 13 des Gehäuses 12 des an der Außenwand 16 befestigten und an eine Zufuhrleitung 17 angeschlossenen Gerätes verbunden werden soll.

Diese Probleme sind bei der erfindungsgemäßen Lösung dadurch vermieden, daß nach Fig.4 der gekrümmte Rohrschuß 2 aus seiner gestrichelt dargestellten, mit dem Ringflansch 13 koaxialen Lage mit einem Abstand c der Stirnseite seines Innenrohres 3 von der freien Stirnseite der in das Innenrohr 3 des Rohrschusses 1 eingeschobenenen Manschette 5 axial in den Ringflansch 13 des Gehäuses 12 in die mit vollen Linien dargestellte Lage eingeschoben werden kann, in der auch die Rohrschüsse 1 und 2 koaxial verlaufen.

Nach Erreichen dieser Lage braucht nur die Manschette 5 (in der Zeichnung nach links) auf das Ende des Innenrohres 3 des Rohrschusses 2 aufgeschoben werden und zur Fertigstellung der Verbindung die Rohrschelle 10 nach Fig.1 zur Überbrückung des Abstandes b der Stirnseiten der Außenrohre 4 montiert werden Die Manschette 5 überbrückt den Abstand a der freien Stirnseiten der Innenrohre 3 der beiden Rohrschüsse 1 und 2. Wesentlich hiefür ist, daß die Mindestlänge des ausragenden Längsabschnittes der Manschette 5 dem maximalen Abstand a der Stirnseiten der Innenrohre 3 der Rohrschüsse 1 und 2 entspricht.

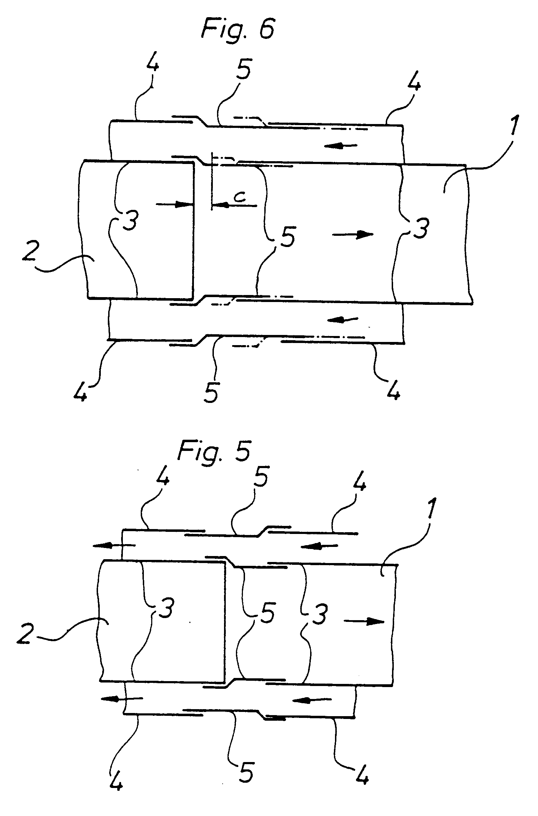

Die Fig. 5 und 6 zeigen Ausführungsvarianten erfindungsgemäßer Steckverbindungen, bei denen sowohl die Innenrohre 3 der miteinander zu verbindenden Rohrschüsse 1 und 2 als auch deren Außenrohre 4 mittels verschiebbarer Manschetten 5 miteinander verbunden sind.

Gemäß Fig.5 übergreifen sowohl die Manschetten 5 der Außenrohre 4 als auch die Manschetten 5 der Innenrohre 3 des einen Rohrschusses die Enden des Außen- und des Innenrohres 4 bzw. 3 des Rohrschusses 2.

Wenn allerdings das Innenrohr beispielsweise der Abgasführung und das Außenrohr der Führung der im Gegenstrom strömenden Verbrennungsluft dient, dann ist es ratsam, die die Rohrenden jeweils ummantelnden Abschnitte der Manschetten 5 jeweils gegen die mit Pfeilen angedeutete Strömungsrichtung der in diesen Rohrschüssen 1 und 2 geförderten Medien weisen zu lassen, wie dies die Fig.6 zeigt. Dabei ist die Manschette 5 des Außenrohres 4 des Rohrschusses 1 in das Außenrohr 4 des Rohrschusses 2 eingeschoben, jedoch die Manschette 5 des Innenrohres des Rohrschusses 5 auf das Innenrohr 3 des Rohrschusses 2 aufgeschoben.

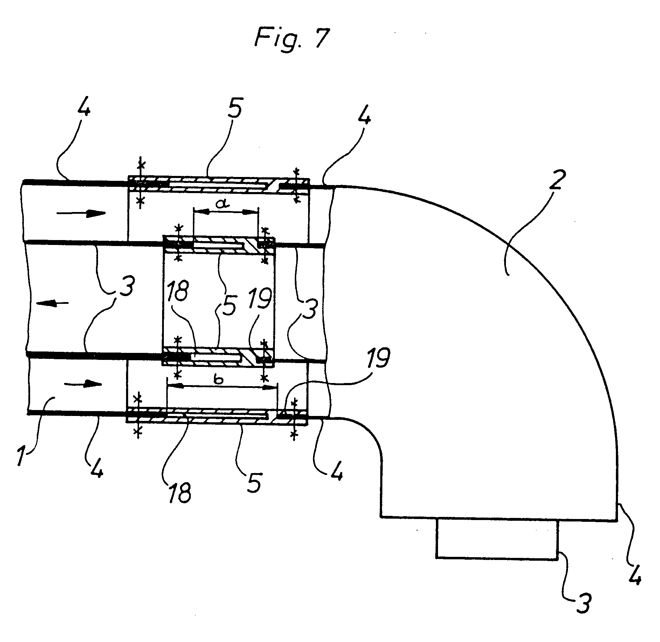

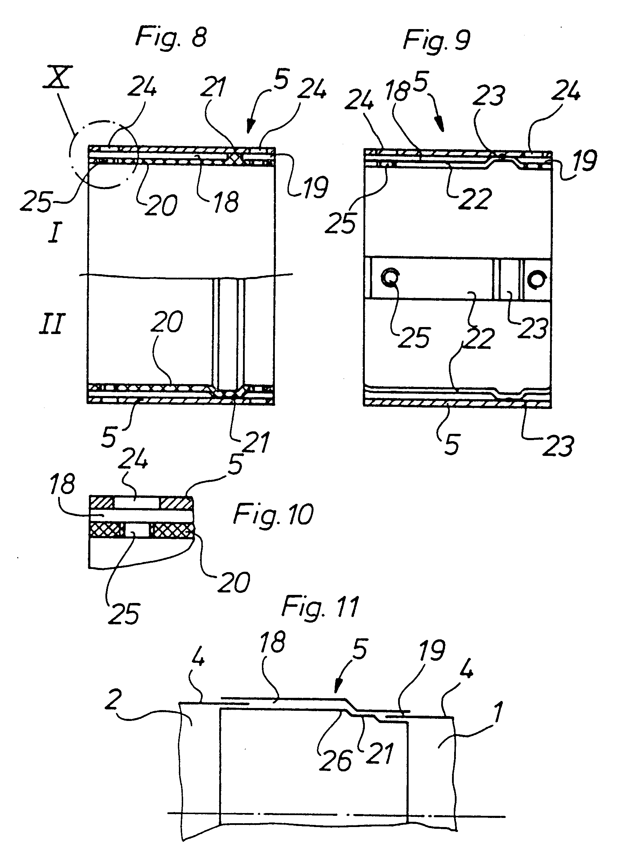

Die Absätze zwischen den beiden Abschnitten der Manschetten dienen demnach als die Einschubtiefe begrenzende Anschläge. Der Abstand b zwischen den Stirnseiten der Außenrohre 4 muß jedenfalls so groß bemessen sein, daß die Manschette 5 der Innenrohre 3 ohne Schwierigkeit gehandhabt werden kann.
Gemäß der in den Fig. 7 bis 11 dargestellten Varianten weisen die Manschetten 5 an ihren beiden Stirnseiten zum Einschieben der stirnseitigen Enden der Wandungen der beiden zu verbindenden Rohrschüsse 1 und 2 geeignete Ringschlitze 18 bzw. 19 auf, deren Breite etwa der einheitlichen Dicke der Rohrwandungen der Rohrschüsse 1 und 2 entspricht.
Diese Ringschlitze 18 und 19 sind ungleich tief und die Tiefe der tieferen Schlitze 18 ist jedenfalls größer als der lichte Abstand a der Stirnseiten der Innenrohre 3 der miteinander zu verbindenden Rohrschüsse 1 und 2.
Gemäß der Fig. 8 bis 11 kann die Manschette 5 zur Ausbildung der Ringschlitze 18 und 19 ein rohrförmiges Futter 20 mit einem an der Innenwand der Manschette 5 anliegenden und die Schlitztiefe beidseits begrenzenden Ringwulst 21 enthalten, der beispielsweise in Varianten, wie sie die obere und untere Hälfte der Fig.8 zeigen, profiliert sein kann..
Wenn an die Dichtheit der Stoßverbindung keine Anforderungen gestellt werden, wie z.B. bei einer Frischluftführung, mag es ausreichen, wenn die Manschette 5 zwecks Begrenzung der Einschubtiefe für die Enden der Rohre 3 und 4 der Rohrschüsse 1 und 2 an ihrer Innenwandung befestigte längsverlaufende Leisten 22 mit auswärtsragenden Wulsten 23 trägt, die die Leisten 22 von der Innenwandung distanzieren.
Solche Futter 20 bzw. Leisten 22 können an der Wandung der Manschette 5 mittels Ausnehmungen 24 der Manschettenwandung durchsetzender, in Ausnehmungen 25 des Futters 20 bzw. der Leisten 22 eingreifender Schrauben befestigt werden. Diese Ausnehmungen 25 des Futters 20 oder der Leisten 22 können hierfür gemäß Fig.10 auch als Gewindebohrungen ausgebildet sein.
Die Rohrenden der in die solcherart gebildeten Schlitze einzuschiebenden Rohre können in diesem Fall Lochungen aufweisen, um die Schäfte der Befestigungsschrauben durchtreten zu lassen. Gegebenenfalls können auch Schlitze angeordnet sein, um die Schrauben beim Einschieben der Rohre nicht ausdrehen zu müssen.

Fig.11 zeigt eine Stoßverbindung, deren Manschette 5 für die Verbindung von Rohrschüssen unterschiedlicher Durchmesser zwischen ihren beiden Längsabschnitten eine Absetzung aufweist.

Diese Absetzung 26 ist bei dieser Ausführungsform der Manschette 5 im Bereich des Ringwulstes 21 des Futters 20 , vorzugsweise neben diesem Ringwulst 21 verlaufend, angeordnet.

## Patentansprüche

1. Stoßverbindung für aus zwei konzentrischen Rohren verschiedenen Durchmessers (Außen- und Innenrohr) bestehende, insbesondere Abgase und Verbrennungsluft von Gasbrennern führende Rohrschüsse, wobei zumindest die Innenrohre dieser Rohrschüsse mittels einer Manschette miteinander verbunden sind, die einen zwischen den Stirnseiten der Rohrschüsse bestehenden Abstand überbrückt, dadurch gekennzeichnet, daß die Manschette (5) aus einer Stellung, in der sie in oder auf des Innen- oder Außenrohr (3 oder 4) des einen (1 oder 2) der beiden zu verbindenden Rohrschüsse (1 und 2) ein- oder aufgeschoben ist und ihr freier Rand der Stirnseite des Innen- oder Außenrohres (3 oder 4) des anderen Rohrschusses (2 oder 1) mit axialem Abstand (c) gegenüberliegt, in eine die Innen- oder Außenrohre (3 oder 4) verbindende Stellung verschiebbar ist, in der sie auf oder in das Innen- oder Außenrohr (3 oder 4) des anderen Rohrschusses (2 oder 1) auf- oder eingeschoben ist.

2. Stoßverbindung nach Anspruch 1, dadurch gekennzeichnet, daß die Manschette (5) aus zwei gegeneinander abgesetzten Abschnitten besteht, von denen einer einen Innendurchmesser aufweist, der dem Außendurchmesser des Innen- beziehungsweise Außenrohres (3 beziehungsweise 4) des einen (1 oder 2) der beiden zu verbindenden Rohrschüsse (1 und 2) entspricht, und der andere einen Außendurchmesser aufweist, der dem Innendurchmesser des Innen- beziehungsweise Außenrohres (3 beziehungsweise 4) des anderen (2 oder 1) der beiden zu verbindenden Rohrschüsse (1 und 2) entspricht (Figuren 1, 4 bis 6).

3. Stoßverbindung nach Anspruch 2, dadurch gekennzeichnet, daß die Mindestlänge eines der beiden Rohrabschnitte dem maximalen Abstand (a beziehungsweise b) der Stirnseiten der Innen- beziehungsweise Außenrohre (3 beziehungsweise 4) der beiden miteinander zu verbindenden Rohrschüsse (1 und 2) entspricht (Figuren 1 und 4 bis 6).

4. Stoßverbindung nach einem der Ansprüche 1 bis 3, gekennzeichnet durch Kupplungsorgane (7 - 9) zur Fixierung der die Innen- beziehungsweise Außenrohre (3 beziehungsweise 4) der zu verbindenden Rohrschüsse (1 und 2) verbindenden Stellung der verschiebbaren Manschette (5) (Figur 1).

5. Stoßverbindung nach Anspruch 4, dadurch gekennzeichnet, daß die Kupplungsorgane aus einer an der Manschette (5) ausgebildeten winkelig verlaufenden führung (8) und einem an einem Ende eines (1 oder 2) der beiden miteinander zu verbindenden Rohrschüsse (1 und 2) ausragenden, in die Führung (8) passenden Zapfen (7) bestehen (Figur 1).

6. Stoßverbindung nach einem der Ansprüche 1 bis 5, gekennzeichnet durch eine an der Manschette (5) angeordnete, radial ausragende, der Verschiebung und gegebenenfalls Drehung dienende Handhabe (6) (Figur 1).

7. Stoßverbindung nach einem der Ansprüche 4 bis 6, dadurch gekennzeichnet, daß ein Kupplungsorgan aus einer die Wandung der Manschette (5) in einer Bohrung, gegebenenfalls in einer Gewindebohrung, durchsetzenden Schraube (9) besteht (Figur 1).

8. Stoßverbindung nach Anspruch 7, dadurch gekennzeichnet, daß der Schraube (9) eine Bohrung, gegebenenfalls eine Gewindebohrung, in der Wandung des Innen- oder Außenrohres (3 beziehungsweise 4) eines (1 oder 2) der zu verbindenden Rohrschüsse (1 und 2) zugeordnet ist (Figur 1).

9. Stoßverbindung nach einem der Ansprüche 1 bis 8, dadurch gekennzeichnet, daß nur die Innenrohre (3) der miteinander zu verbindenden Rohrschüsse (1 und 2) mittels einer verschiebbaren Manschette (5), die Außenrohre (4) hingegen mittels einer den Abstand (b) ihrer Stirnseiten Überbrückenden Rohrschelle (10) verbunden sind (Figur 1).

10. Stoßverbindung nach einem der Ansprüche 1 bis 8, dadurch gekennzeichnet, daß sowohl die Innenrohre (3) als auch die Außenrohre (4) der miteinander zu verbindenden Rohrschüsse (1 und 2) mittels je einer verschiebbaren, die Abstände (a beziehungsweise b) ihrer Stirnseiten überbrückenden Manschette (5) verbunden sind (Figuren 5, 6).

11. Stoßverbindung nach Anspruch 10, dadurch gekennzeichnet, daß sowohl die die Innenrohre (3) als auch die die Außenrohre (4) verbindende Manschette (5) des einen (1 oder 2) der beiden miteinander zu verbindenden Rohrschüsse (1 und 2) das Innen- beziehungsweise Außenrohr (3 beziehungsweise 4) des anderen Rohrschusses (2 oder 1) übergreifen und auf die Enden dieser Rohre (3 beziehungsweise 4), in dieselbe Richtung weisend, aufgeschoben sind (Figur 6).

12. Stoßverbindung nach Anspruch 10, dadurch gekennzeichnet, daß die Manschette (5) des Außenrohres (4) des einen (1 oder 2) der beiden Rohrschüsse (1 und 2) in das Außenrohr (4) des anderen Rohrschusses (2 oder 1) eingeschoben ist, jedoch die Manschette (5) des Innenrohres (3) dieses einen (1 oder 2) Rohrschusses auf das Innenrohr (3) des anderen Rohrschusses (2 oder 1) aufgeschoben ist (Figur 5).

13. Stoßverbindung nach Anspruch 12, dadurch gekennzeichnet, daß die auf die Enden der Innen- beziehungsweise Außenrohre (3 beziehungsweise 4) aufgeschobenen Abschnitte der Manschette (5) jeweils gegen die vorgegebene Strömungsrichtung der in diesen Rohren (3, 4) strömenden Medien weisen (Figur 5).

14. Stoßverbindung nach Anspruch 1, dadurch gekennzeichnet, daß die Manschette (5) an ihren beiden Stirnseiten zum Einschieben stirnseitiger Enden des Innen- beziehungsweise Außenrohres (3 beziehungsweise 4) der beiden miteinander zu verbindenden Rohrschüsse (1 und 2) Ringschlitze (18 und 19) aufweist, deren Breite etwa der Dicke der Wandungen der Rohrschüsse (1, 2) entspricht (Figuren 7 bis 11).

15. Stoßverbindung nach Anspruch 14, dadurch gekennzeichnet, daß die Ringschlitze (18 und 19) der beiden Stirnseiten ungleich tief sind, wobei die Mindesttiefe des tieferen Ringschlitzes (18) dem maximalen Abstand (a beziehungsweise b) der beiden miteinander zu verbindenden Rohrschüsse (1, 2) entspricht.

16. Stoßverbindung nach Anspruch 14 oder 15, dadurch gekennzeichnet, daß die Manschette (5) zur Bildung der Ringschlitze (18 und 19) ein rohrförmiges, mit einem die Schlitztiefe begrenzenden Außenwulst (21) an der Innenwand der Manschette (5) anliegendes Futter (20) enthält (Figur 8).

17. Stoßverbindung nach Anspruch 1, dadurch gekennzeichnet, daß die Manschette (5) zur Begrenzung der Einschubtiefe der Enden der Innen- beziehungsweise Außenrohre (3 beziehungsweise 4) der Rohrschüsse (1 und 2) an ihrer Innenwandung längsverlaufende Leisten (22) mit einem die Einschubtiefe begrenzenden auswärtsragenden, an der Innenwandung der Manschette (5) anliegenden und beidseits Schlitze (18 und 19) begrenzenden Wulst (23) trägt (Figur 9).

18. Stoßverbindung nach Anspruch 16 oder 17, dadurch gekennzeichnet, daß das Futter (20) beziehungsweise die Leisten (22) an der Innenseite der Wandung der Manschette (5) mittels Ausnehmungen (24) der Manschettenwandung durchsetzender, in Ausnehmungen (25) des Futters (20) beziehungsweise dar Leiste (22) eingreifender Schrauben befestigt sind (Figuren 8 bis 10).

19. Stoßverbindung nach Anspruch 18, dadurch gekennzeichnet, daß die Ausnehmungen (25) des Futters (20) oder der Leisten (22) als Gewindebohrungen ausgebildet sind (Figur 10).

20. Stoßverbindung nach Anspruch 18 oder 19, dadurch gekennzeichnet, daß die Ausnehmungen (24 beziehungsweise 25) in der Nähe der beiden Stirnseiten der Minschette (5) beziehungsweise des Futters (20) oder der Leisten (22) vorgesehen sind (Figuren 8, 9).

21. Stoßverbindung nach einem der Ansprüche 2 bis 20, dadurch gekennzeichnet, daß die Manschette (5) für die Verbindung von Rohrschüssen (1, 2) unterschiedlicher Durchmesser zwischen ihren beiden Abschnitten eine Abgrenzung (26) aufweist (Figur 11).

22. Stoßverbindung nach den Ansprüchen 16 und 21, dadurch gekennzeichnet, daß die Absetzung (26) im Bereich des Ringwulstes (21) des Futters (20) der Manschette (5), vorzugsweise neben diesem Ringwulst (21) verlaufend, angeordnet ist (Figur 11).

## Claims

1. A butt joint between two tube sections, which consist of two concentric tubes which differ in diameter (outer tube and inner tube) and serve particularly for conducting exhaust gases and combustion air of gas burners, wherein at least the inner tubes of said tube sections are joined by a collar, which spans a gap between the end faces of the tube sections, characterized in that the collar is displaceable from a position in which the collar is slidably fitted in the inner tube or on the outer tube (3 or 4) of one (1 or 2) of the two tube sections (1 and 2) to be joined and the free edge of the collar faces the end face of the inner tube or outer tube (3 or 4) of the other tube section (2 or 1) at an axial distance (c) therefrom, to a position in which the collar joins the inner tubes or outer tubes (3 or 4) and is slidably fitted on the inner tube or in the outer tube (3 or 4) of the other tube section (2 or 1).

2. A butt joint according to claim 1, characterized in that the collar (5) consists of two sections, which are offset from each other and one of which has an inside diameter which corresponds to the outside diameter or the inner tube or outer tube (3 or 4) of one (1 or 2) of the two tube sections (1 and 2) to be joined, and the other of which has an outside diameter which corresponds to the inside diameter of the inner tube or outer tube (3 or 4) of the other (2 or 1) of the two tube sections (1 and 2) to be joined (Figures 1, 4 to 6).

3. A butt joint according to claim 2, characterized in that the minimum length of one of the two collar sections corresponds to the maximum distance (a or b) between the end faces of the inner tubes or outer tubes (3 or 4) of the two tube sections (1 and 2) to be joined (Figures 1 and 4 to 6).

4. A butt joint according to any of claims 1 to 3, characterized by coupling means (7 to 9) for fixing the displaceable collar (5) in the position in which the collar joins the inner or outer tubes (3 or 4) of the tube sections (1 and 2) to be joined.

5. A butt joint according to claim 4, characterized in that the coupling means consist of an angled guide (8), which is formed on the collar (5), and a pin (7), which protrudes at one end of one (1 or 2) of the two tube sections (1 and 2) to be joined, and fits into the guide (8) (Figure 1).

6. A butt joint according to any of claims 1 to 5, characterized by a radially outwardly protruding handle (6), which is provided on the collar (5) and serves to effect a displacement and optionally a rotation (Figure 1).

7. A butt joint according to any of claims 4 to 6, characterized in that a coupling member consists of a screw (9), which extends through the wall of the collar (5) in a bore, optionally in a tapped bore.

8. A butt joint according to claim 7, characterized in that the screw (9) has associated with it a bore, optionally a tapped bore, in the wall of the inner tube or outer tube (3 or 4) of one (1 or 2) of the tube sections (1 and 2) to be joined (Figure 1).

9. A butt joint according to any of claims 1 to 8, characterized in that only the inner tubes (3) of the tube sections (1 and 2) to be joined are joined by a displaceable collar (5) and the outer tubes (4) are joined by a tube clip (10), which spans the distance (b) between their end faces (Figure 1).

10. A butt joint according to any of claims 1 to 8, characterized in that the inner tubes (3) and the outer tubes (4) of the tube sections (1 and 2) to be joined are joined by respective displaceable collars (5), which span the distances (a and b) between the end faces of said tubes (Figures 5, 6).

11. A butt joint according to claim 10, characterized in that the inner tubes (3) and the outer tubes (4) of the tube sections (1 and 2) to be joined are joined by respective collars (5), which are provided on one (1 or 2) of said two tube sections (1 and 2) and overlap the inner tube and outer tube (3 and 4), respectively, of the other tube section (2 or 1) and are slidably fitted on the ends of said tubes (3 and 4) and face in the same direction (Figure 6).

12. A butt joint according to claim 10, characterized in that the collar (5) of the outer tube (4) of one (1 or 2) of the two tube sections (1 and 2) is slidably fitted in the outer tube (4) of the other tube section (2 or 1) and the collar (5) of the inner tube (3) of said one tube section (1 or 2) is slidably fitted on the inner tube (3) of the other tube section (2 or 1) (Figure 5).

13. A butt joint according to claim 12, characterized in that those sections of the collar (5) which are slidably fitted on the ends of the inner tube and outer tube (3 or 4) face opposite to the predetermined direction of flow of fluids in said tubes (3, 4) (Figure 5).

14. A butt joint according to claim 1, characterized in that the collar (5) is provided at its two end faces with annular slots (18 and 19) for slidably receiving end portions of the inner or outer tube (3 or 4) of the two tube sections (1 and 2) to be joined and the width of said annular slots is approximately as large as the thickness of the walls of the tube sections (1, 2) (Figures 7 to 11).

15. A butt joint according to claim 14, characterized in that the annular slots (18 and 19) in the two end faces have different depths and the minimum depth of the deeper annular slot (18) corresponds to the maximum distance (a or b) between the two tube sections (1, 2) to be joined.

16. A butt joint according to claim 14 or 15, characterized in that the collar (5) contains a tubular liner (20), which defines the annular slots (18 and 19) and has an outer bead (21) that contacts the inside surface of the collar (5) and defines the depth of the slot (Figure 8).

17. A butt joint according to claim 1, characterized in that the collar (5) is provided on its inside surface with longitudinally extending bars (22), which define the depth of insertion of the inner or outer tubes (3 or 4) of the tube sections (1 and 2) and are formed with an outwardly protruding bead (23), which defines the depth of insertion and contacts the inside surface of the collar (5) and defines slots (18 and 19) on opposite sides (Figure 9).

18. A butt joint according to claim 16 or 17, characterized in that the liner (20) or the bars (22) are secured to the inside surface of the wall of the collar (5) by screws, which extend through apertures (24) of the collar wall and into apertures (25) in the liner (20) or the bar (22) (Figures 8 to 10).

19. A butt joint according to claim 18, characterized in that the apertures (25) of the liner (20) or the bars (22) consist of tapped bores (Figure 10).

20. A butt joint according to claim 18 or 19, characterized in that the apertures (24 or 25) are provided near the two end faces of the collar (5) or the liner (20) or the bars (22) (Figures 8, 9).

21. A butt joint according to any of claims 2 to 20, characterized in that the collar (5) is provided between its two sections with boundary means (26) for the connection of tube sections (1, 2) which differ in diameter.

22. A butt joint according to claims 16 and 21, characterized in that the shoulder (26) is provided adjacent to the annular bead (21) of the liner (20) of the collar (5), and preferably extends beside said annular bead (21) (Figure 11).

## Revendications

1. Moyen d'assemblage bout à bout pour deux éléments de tuyauterie comprenant chacun deux tuyaux concentriques de diamètre différent (tuyaux extérieur et intérieur) notamment pour la canalisatioin des gaz brûlés et de l'air de combustion de brûleurs à gaz, où au moins les tuyaux intérieurs de ces éléments sont assemblés entre eux par un manchon qui couvre une distance séparant les bouts des éléments de tuyauterie, caractérisé par le fait que le manchon (5), depuis une position dans laquelle il est introduit dans ou glissé sur le tuyau intérieur ou le tuyau extérieur (3 ou 4) de l'un (1 ou 2) des deux éléments de tuyauterie (t et 2) à assembler et où son bout libre se trouve à une distance axiale (c) du bout du tuyau intérieur ou extérieur (3 ou 4) de l'autre élément de tuyauterie (2 ou 1), peut être mis dans une position où il assemble les tuyaux intérieur ou extérieur (3 ou 4) après qu'il a été introduit dans ou glissé sur le tuyau intérieur ou extérieur (3 ou 4) de l'autre élément de tuyauterie (2 ou 1).

2. Moyen d'assemblage bout à bout suivant la revendication 1, caractérisé par le fait que le manchon (5) comprend deux parties étagées l'une par rapport à l'autre dont l'une a un diamètre intérieur qui correspond au diamètre extérieur du tuyau intérieur ou extérieur (3 ou 4) de l'un (1 ou 2) des deux éléments de tuyauterie (1 et 2) à assembler, et l'autre a un diamètre extérieur qui correspond au diamètre intérieur du tuyau intérieur ou extérieur (3 ou 4) de l'autre (2 ou 1) des deux éléments de tuyauterie (1 et 2) à assembler (Fig. 1, 4 à 6).

3. Moyen d'assemblage bout à bout suivant la revendication 2, caractérisé par le fait que la longueur mini de l'une des deux parties du manchon est égale à la distance maxi (a ou b) entre les bouts des tuyaux intérieur ou extérieur (3 ou 4) des deux éléments de tuyauterie (1 et 2) à assembler (Fig. 1 et 4 à 6).

4. Moyen d'assemblage bout à bout suivant l'une des revendications 1 à 3, caractérisé par des auxiliaires d'accouplement (7 - 9) pour fixer le manchon (5) dans sa position assurant l'assemblage des tuyaux intérieurs ou extérieurs (3 ou 4) des éléments de tuyauterie (1 et 2) à assembler (Fig. 1).

5. Moyen d'assemblage bout à bout suivant la revendication 4, caractérisé par le fait que les auxiliaires d'accouplement se composent d'une coulisse coudée (8) pratiquée dans le manchon (5) et d'un doigt (7) adapté à cette coulisse (8) et monté au bout de l'un (1 ou 2) des deux éléments de tuyauterie (1 et 2) à assembler (Fig. 1).

6. Moyen d'assemblage bout à bout suivant l'une des revendications 1 à 5, caractérisé par un organe de manipulation (6) disposé radialement sur l'extérieur du manchon (5) et servant à déplacer et éventuellement à faire tourner ledit manchon (Fig. 1).

7. Moyen d'assemblage bout à bout suivant l'une des revendications 4 à 6, caractérisé par le fait qu'un auxiliaire d'accouplement est constitué par une vis (9) logée dans un alésage, éventuellement un taraudage, pratiqué dans la paroi du manchon (5) (Fig. 1).

8. Moyen d'assemblage bout à bout suivant la revendication 7, caractérisé par le fait qu'il est prévu pour la vis (9) un alésage, éventuellement un taraudage, dans la paroi du tuyau intérieur ou extérieur (3 ou 4) de l'un des éléments de tuyauterie (1 et 2) à assembler (Fig. 1).

9. Moyen d'assemblage bout à bout suivant l'une des revendications 1 à 8, caractérisé par le fait que seuls les tuyaux intérieurs (3) des éléments de tuyauterie (1 et 2) à assembler sont réunis par un manchon (5) mobile, tandis que les tuyaux extérieurs (4) le sont au moyen d'un collier (10) couvrant la distance (b) entre leurs bouts (Fig. 1).

10. Moyen d'assemblage bout à bout suivant l'une des revendications 1 à 8, caractérisé par le fait qu'aussi bien les tuyaux intérieurs (3) que les tuyaux extérieurs (4) des éléments de tuyauterie (1 et 2) à assembler sont réunis entre eux par un manchon (5) mobile couvrant les distances (a ou b) entre leurs bouts respectifs (Fig. 5, 6).

11. Moyen d'assemblage bout à bout suivant la revendication 10, caractérisé par le fait que les manchons (5) réunissant les tuyaux intérieurs (3) et les tuyaux extérieurs (4) de l'un (1 ou 2) des deux éléments de tuyauterie (1 et 2) à assembler, dépassent le diamètre du tuyau intérieur ou extérieur (3 ou 4) de l'autre élément de tuyauterie (2 ou 1) et sont glissés dans le même sens sur les bouts de ces tuyaux (3 ou 4) (Fig. 6).

12. Moyen d'assemblage bout à bout suivant la revendication 10, caractérisé par le fait que le manchon (5) du tuyau extérieur (4) de l'un (1 ou 2) des deux éléments de tuyauterie (1 et 2) est introduit dans le tuyau extérieur (4) de l'autre élément de tuyauterie (2 ou 1), tandis que le manchon (5) du tuyau intérieur (3) de cet élément de tuyauterie (1 ou 2) est glissé sur le tuyau intérieur (3) de l'autre élément de tuyauterie (2 ou 1) (Fig. 5).

13. Moyen d'assemblage bout à bout suivant la revendication 12, caractérisé par le fait que les parties du manchon (5) appliquées aux bouts des tuyaux intérieurs ou extérieurs (3 ou 4) sont orientées contrairement au sens d'écoulement des fluides circulant dans ces tuyaux (3, 4) (Fig. 5).

14. Moyen d'assemblage bout à bout suivant la revendication 1, caractérisé par le fait que le manchon (5) présente à ses deux extrémités des rainures annulaires (18 et 19) où sont introduits les bouts du tuyau intérieur ou extérieur (3 ou 4) des deux éléments de tuyauterie (1 et 2) à assembler, et dont la section correspond à peu près à l'épaisseur des parois des éléments de tuyauterie (1, 2) (Fig. 7 à 11).

15. Moyen d'assemblage bout à bout suivant la revendication 14, caractérisé par le fait que les rainures annulaires (18 et 19) n'ont pas la même profondeur, la profondeur mini de la rainure plus profonde (18) correspondant à la distance maxi (a ou b) entre les deux éléments de tuyauterie (1, 2) à assembler.

16. Moyen d'assemblage bout à bout suivant la revendication 14 ou 15, caractérisé par le fait que le manchon (5) comprend une doublure tubulaire (20) comportant un bourrelet (21) délimitant la profondeur des rainures (18 et 19) et s'appliquant contre la paroi intérieure du manchon (5) (Fig. 8).

17. Moyen d'assemblage bout à bout suivant la revendication 1, caractérisé par le fait que le manchon (5) porte à sa paroi intérieure, pour délimiter la profondeur de pénétration des bouts des tuyaux intérieurs ou extérieurs (3 ou 4) des éléments de tuyauterie (1 et 2), des baguettes (22) munies d'un bourrelet (23) délimitant ladite profondeur et s'appliquant contre la paroi intérieure du manchon (5) pour former ainsi des rainures (18 et 19) s'étendant de part et d'autre (Fig. 9).

18. Moyen d'assemblage bout à bout suivant la revendication 16 ou 17, caractérisé par le fait que la doublure (20) respectivement les baguettes (22) sont fixées sur la paroi intérieure du manchon (5) à l'aide de vis logées dans des trous (24) de la paroi du manchon (5) et dans des trous (25) de la doublure (20) respectivement de la baguette (22) (Fig. 8 à 10).

19. Moyen d'assemblage bout à bout suivant la revendication 18, caractérisé par le fait que les trous (25) dans la doublure (20) ou les baguettes (22) sont des taraudages (Fig. 10).

20. Moyen d'assemblage bout à bout suivant la revendication 18 ou 19, caractérisé par le fait que les trous (24 ou 25) sont prévus à proximité des deux bouts du manchon (5) ou de la doublure (20) respectivement des baguettes (22) (Fig. 8, 9).

21. Moyen d'assemblage bout à bout suivant l'une des revendications 2 à 20, caractérisé par le fait que le manchon (5) pour l'assemblage d'éléments de tuyauterie (1, 2) de diamètre différent comporte entre ses deux parties un épaulement (26) (Fig. 11).

22. Moyen d'assemblage bout à bout suivant les revendications 16 et 21, caractérisé par le fait que l'épaulement (26) est prévu à proximité du bourrelet (21) de la doublure (20) du manchon (5), de préférence à côté dudit bourrelet (21) (Fig. 11).
